# FASCICULE DE BREVET EUROPEEN

(11) **EP 0 475 809 B1**
(45) Date de publication et mention de la délivrance du brevet: **10.05.1995**
(21) Numéro de dépôt: 91402312.2
(22) Date de dépôt: 26.08.1991
(51) Int. Cl.: G01P 3/486

(54) **Capteur de vitesse d'un élément rotatif notamment d'une roue de véhicule automobile**
Geschwindigkeitsmessaufnehmer eines drehbaren Elements, insbesondere für ein Kraftfahrzeugrad
Speed sensor for a rotating element, in particular for a motor vehicle wheel

(30) Priorité: 27.08.1990 FR 9010686
(43) Date de publication de la demande: 18.03.1992
(73) Titulaire: JAEGER, F-92303 Levallois-Perret (FR)
(72) Inventeur: Hennequin, Yves, F-78210 St Cyr L'Ecole (FR); Jury, Catherine, F-92400 Courbevoie (FR)
(74) Mandataire: Martin, Jean-Jacques

(56) Documents cités:
- EP-A- 0 149 769
- CH-A- 580 812
- DE-A- 2 909 735
- US-A- 4 580 130
- US-A- 4 865 468

## Description

La présente invention concerne le domaine des capteurs de vitesse d'un élément rotatif.

La présente invention trouve notamment, mais non exclusivement, application dans la détection de la vitesse de rotation de roues de véhicules automobiles.

La présente invention concerne plus précisément un capteur de vitesse d'un élément rotatif par rapport à un élément de chassis fixe comprenant, de façon connue en soi :
- un organe codeur annulaire fixé sur la partie mobile de l'élément rotatif et pourvu d'une pluralité de surfaces de réflexion réparties autour de son axe, et
- un transducteur optique fixé sur l'élément de chassis et comportant :
   . au moins un émetteur optique apte à diriger un faisceau lumineux sur lesdites surfaces de réflexion, et
   . au moins un récepteur optique apte à détecter le faisceau lumineux renvoyé par les surfaces de réflexion.

Un capteur optique de vitesse du type indiqué ci-dessus est décrit par exemple dans le document FR-A-2048032.

Le document CH-A-580812 décrit un capteur du type précité et conforme au préambule de la revendication 1 annexée, dans lequel il est prévu en outre au moins deux fibres optiques dont une première extrémité est placée respectivement en regard de l'émetteur optique et du récepteur optique, tandis que leur seconde extrémité débouche en regard de l'organe codeur.

Le document EP-A-149769 décrit une autre variante d'un capteur optique de vitesse dans lequel des fibres optiques assurent les liaisons entre des émetteur et récepteur optiques fixes et un organe codeur rotatif.

Un tel capteur optique de vitesse présente en théorie de nombreux avantages par rapport aux capteurs magnétiques connus, tels que les capteurs comprenant une sonde à effet Hall : le capteur optique est totalement insensible aux champs électriques et magnétiques.

Toutefois, à la connaissance de la Demanderesse, ces capteurs optiques ne sont pas utilisés dans la pratique, en particulier dans le domaine automobile.

Cette désaffection pour les capteurs optiques semble due au fait que ceux-ci sont en général trop volumineux.

Par ailleurs, la fiabilité des capteurs optiques jusqu'ici proposés laisse à désirer. En effet, le dépôt de salissures ou corps étrangers quelconques sur les surfaces optiquement actives de l'organe codeur conduit généralement à une information de sortie erronnée.

Le but principal de la présente invention est de proposer un nouveau capteur optique de vitesse présentant un encombrement compatible avec les contraintes imposées sur véhicules automobiles, et de fiabilité améliorée.

Ce but est atteint selon la présente invention grâce à un capteur du type indiqué en revendication 1 annexée.

La notion de "chambre étanche de roulement" doit être comprise dans un sens large. L'organe codeur peut en effet être placé à une extrémité axiale du roulement comme cela sera expliqué par la suite.

L'utilisation de fibres optiques permet de déporter l'émetteur optique et le récepteur optique par rapport à l'organe codeur. Cette disposition conduit par conséquent à un faible encombrement au niveau du roulement, adapté aux contraintes imposées sur véhicules automobiles.

La dimension réduite du capteur permet l'implantation d'un capteur de vitesse sur montage tournant sans affaiblir ses caractéristiques mécaniques.

Par ailleurs, l'exploitation de l'espace étanche du roulement permet de profiter de l'étanchéité absolue des roulements utilisés sur véhicules automobiles, sans mesure additionnelle coûteuse pour protéger l'organe codeur, comme cela sera explicité par la suite.

De préférence, selon la présente invention, les surfaces de réflexion prévues sur l'organe codeur sont formées de paires de surfaces associées travaillant à la façon d'un catadioptre.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en coupe axiale d'un capteur conforme à la présente invention associé à une roue de véhicule automobile,
- la figure 2 représente une vue en coupe similaire à la figure 1 illustrant en détail le capteur conforme à la présente invention,
- la figure 3 représente une vue schématique latérale partielle d'un organe codeur conforme à un mode de réalisation de la présente invention,
- la figure 4 représente une vue schématique latérale générale du même organe codeur,
- la figure 5 représente une vue latérale générale d'un codeur conforme à une autre variante de réalisation de la présente invention,
- la figure 6 représente une vue schématique en coupe axiale de l'organe codeur illustré sur la figure 5 selon un plan diamétral référencé VI-VI sur la figure 5,
- les figures 7, 8, 9 et 10 représentent selon un plan de coupe axial référencé VII-VII sur la figure 5 différentes variantes de réalisation d'une autre partie de l'organe codeur illustrée sur la figure 5,
- la figure 11 représente, selon une vue en coupe axiale similaire aux figures 6 à 10, une autre variante de réalisation de l'organe codeur conforme à la présente invention,
- la figure 12 représente une vue latérale partielle d'un organe codeur conforme à une autre variante de la présente invention, généralement similaire à la figure 3, mais placé en regard d'un transducteur optique comprenant trois fibres optiques associées à un émetteur et deux récepteurs optiques,
- la figure 13A représente schématiquement le signal de sortie d'un récepteur optique associé à l'organe codeur représenté sur la figure 3,
- la figure 13B représente le signal logique obtenu après mise en forme du signal illustré sur la figure 13A,
- la figure 14A représente schématiquement les signaux de sortie de deux récepteurs optiques associés à l'organe codeur représenté sur la figure 12,
- la figure 14B représente un signal logique obtenu après mise en forme de l'un des signaux représenté sur la figure 14A,
- la figure 15A représente schématiquement les signaux obtenus en sortie des deux récepteurs optiques associés à l'organe codeur représenté sur la figure 12, en cas de décalage de l'un des récepteurs,
- les figures 15B et 15C représentent les signaux logiques correspondant après mise en forme,
- la figure 16 représente une vue schématique d'ensemble latérale d'un organe codeur conforme à une autre variante de la présente invention,
- les figures 17 et 18 représentent deux vues en coupe axiale décalées angulairement entre elles d'un organe codeur conforme à une autre variante de réalisation de la présente invention,
- la figure 19 représente une vue en coupe axiale d'une autre variante d'un organe codeur conforme à la présente invention,
- la figure 20 représente une vue de détail d'un mode de réalisation particulier de paires de surfaces de réflexion conforme à la présente invention, et
- la figure 21 représente une vue schématique en coupe axiale, généralement similaire à la figure 1, d'une variante du capteur conforme à la présente invention.

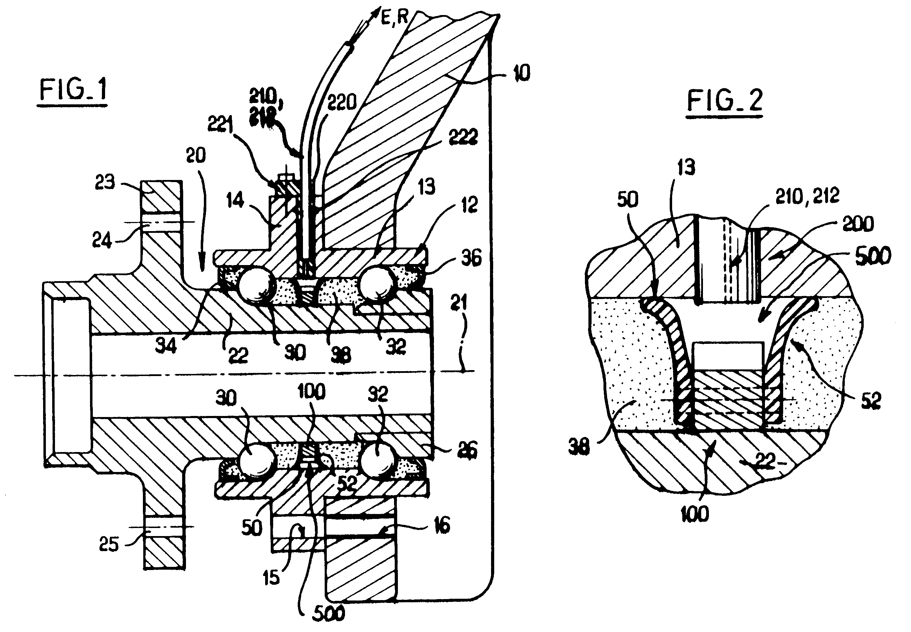

On a représenté schématiquement sur les figures 1 et 2 annexées l'application préférentielle du capteur de vitesse conforme à la présente invention à la détection de la vitesse de rotation d'une roue de véhicule automobile.

On aperçoit sur la figure 1 un élément de chassis référencé 10 du véhicule automobile, ainsi qu'un moyeu support de roue associé référencé 20.

Le moyeu 20 est centré sur un axe 21. Le moyeu 20 est porté à rotation par l'élément 10 de chassis autour de l'axe 21 précité.

Pour l'essentiel, le moyeu 20 est formé d'un manchon généralement cylindrique 22 centré sur l'axe 21 et d'une bride 23 annulaire en saillie sur la surface extérieure du manchon 22 et centrée sur le même axe 21. La bride 23 est pourvue d'une pluralité d'alésages traversants, d'axes parallèles à l'axe 21, équirépartis autour de ce dernier. Deux alésages diamétralement opposés sont ainsi représentés schématiquement sur la figure 1 sous les références 24 et 25.

Ces alésages 24 et 25 sont prévus pour fixer de façon connue en soi une roue de véhicule automobile sur la bride 23.

Plus précisément, selon le mode de réalisation particulier représenté sur la figure 1, l'élément 10 de chassis porte une pièce support 12 qui elle-même reçoit le moyeu 20 à rotation autour de l'axe 21.

Pour l'essentiel la pièce support 12 est formée d'un manchon 13 muni d'une bride 14 permettant la fixation de la pièce support sur l'élément de chassis 10 à l'aide de tous moyens classiques appropriés tels que des boulons ou équivalents engagés dans des alésages 15, 16 parallèles à l'axe 21 ménagés dans la bride 14 et l'élément de chassis 10.

On aperçoit également sur la figure 1 annexée un roulement formé entre la pièce support 13 et le moyeu 20.

Le roulement comprend deux séries de corps de roulement 30, 32 espacées axialement, placées entre la pièce support 13 et le moyeu 20.

Selon le mode de réalisation particulier représenté sur la figure 1 les corps de roulement 30, 32 sont formés de billes sphériques.

Les corps de roulement peuvent être formés de tout autre moyen connu de l'homme de l'art, tel que par exemple des rouleaux cylindriques, tronconiques ou équivalents.

Le roulement ainsi formé est fermé de façon étanche par deux lèvres d'étanchéité annulaires 34, 36 placées respectivement sur l'extérieur des deux séries de corps de roulement 30, 32.

Selon le mode de réalisation particulier représenté sur la figure 1, les lèvres d'étanchéité 34, 36 sont fixées sur la pièce support 12. Leur bord libre, radialement interne par rapport à l'axe 21 repose sur la surface extérieure du moyeu 20. La surface des lèvres d'étanchéité 34, 36 dirigée vers l'extérieur du roulement est convexe. Ainsi, le bord libre radialement interne des lèvres d'étanchéité 34, 36 converge vers l'intérieur du roulement, par rapport à la base des lèvres d'étanchéité 34, 36 fixée sur la pièce support 12. Ce mode de réalisation particulier n'est bien entendu pas limitatif.

Ainsi, les deux lèvres d'étanchéité annulaire 34, 36 définissent en coopération avec le moyeu 20 et la pièce support 13 un espace étanche 38. Cet espace 38 est généralement rempli de graisse.

On notera que selon la représentation particulière donnée sur la figure 1 et considérée actuellement comme préférentielle dans le cadre de la présente invention, la cage intérieure du roulement est constituée par le moyeu 20 lui-même, tandis que la cage extérieure du roulement est constituée par la pièce support 13 elle-même.

En d'autres termes, les chemins de roulement des corps de roulement 30, 32 sont formés directement sur la surface externe du moyeu 20 et sur la surface interne de la pièce support 13.

Plus précisément, les chemins de roulement prévus sur la cage interne du roulement sont formés l'un sur le manchon 22 du moyeu 20, l'autre sur une contre-pièce 26 fixée axialement sur le manchon 22. Il s'agit là de dispositions connues en soi de l'homme de l'art pour permettre la réalisation du roulement sur les pièces de structure elle-mêmes. Ces dispositions ne seront donc pas décrites plus en détail par la suite.

Bien entendu la présente invention n'est pas limitée à l'application dans un roulement dont la cage interne et la cage externe sont formées directement sur les pièces de structure comme représenté sur la figure 1.

La présente invention trouve également application dans les roulements réalisés sous forme de cartouches indépendantes destinées à être intercalées entre un élément de structure fixe et un élément de structure rotatif.

Toutefois, l'application à des roulements dont la cage interne et la cage externe sont formées directement des pièces de structure est considérée actuellement comme largement préférentielle dans la mesure où elle limite les contraintes d'alignement du transducteur optique conforme à la présente invention sur l'organe codeur associé.

Comme indiqué précédemment selon la présente invention, le roulement représenté sur la figure 1 comprend un capteur de vitesse formé d'un organe codeur annulaire 100 et d'un transducteur optique 200.

L'organe codeur annulaire 100 est fixé sur la partie mobile de l'élément rotatif, soit en l'espèce sur le moyeu 20.

L'organe codeur annulaire 100 est pourvu d'une pluralité de surfaces de réflexion réparties autour de son axe 21.

Différentes variantes de réalisation de l'organe codeur annulaire 100 seront décrites par la suite.

Par ailleurs selon la présente invention l'organe codeur 100 est placé dans la chambre étanche 38 du roulement.

Le transducteur optique 200 est fixé sur l'élément de chassis 13. Il comprend au moins deux fibres optiques 210, 212 associées respectivement à un émetteur optique E et à un récepteur optique R. L'émetteur optique et le récepteur optique n'ont pas été représentés en détail sur les figures annexées. Ils sont seulement illustrés schématiquement sous les références E et R respectivement.

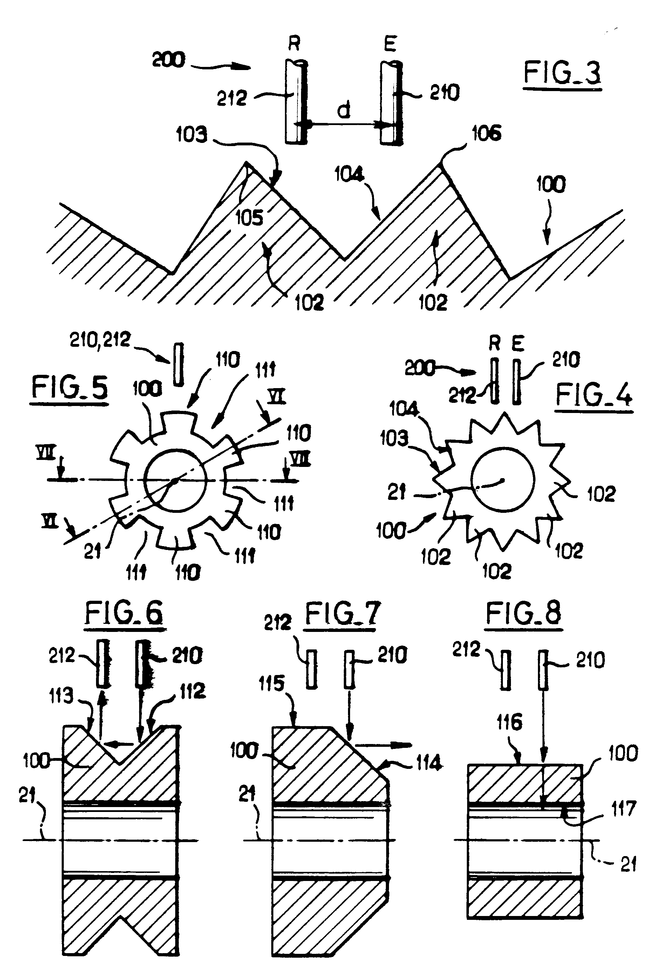

Les fibres optiques 210, 212 ont une première extrémité placée respectivement en regard de l'émetteur optique E et du récepteur optique R tandis que leur seconde extrémité, représentée par exemple schématiquement sur la figure 3, traverse la cage fixe 13 du roulement pour déboucher en regard de l'organe codeur 100.

Ainsi l'émetteur optique dirige par l'intermédiaire de la fibre 210, un faisceau lumineux sur les surfaces de réflexion prévues sur l'organe codeur 100, tandis que le récepteur optique R reçoit par l'intermédiaire de la fibre optique 212, le faisceau lumineux renvoyé par les surfaces de réflexion prévues sur l'organe codeur 100.

L'organe codeur 100 est formé d'un anneau fixé sur l'élément rotatif 22 et centré par conséquent sur l'axe 21. L'organe codeur 100 peut être réalisé par moulage d'une pièce en matière plastique recouverte d'un matériau optiquement réfléchissant, par exemple à l'aide de polysulfone ou en polyether à noyau nophtalénique commercialisé sous la marque VECTRA. L'organe codeur 100 peut également être réalisé en métal, par exemple à l'aide de laiton, le cas échéant chromé ou nickelé.

Selon le mode de réalisation de la figure 1, l'organe codeur 100 est placé dans la chambre étanche 38 du roulement entre les deux séries de corps de roulement 30, 32.

Plus précisément encore pour éviter que les surfaces de réflexion optiquement actives prévues sur l'organe codeur 100 ne soient salies par la graisse du roulement, comme représenté sur les figures 1 et 2, de préférence l'organe codeur 100 est placé entre deux joints annulaires à lèvres référencés respectivement 50 et 52 sur la figure 2. Les joints 50, 52 sont symétriques par rapport à un plan normal à l'axe 21.

Les joints annulaires à lèvres 50, 52 peuvent être réalisés par exemple à l'aide de caoutchouc. Les joints 50, 52 sont solidaires de l'organe codeur 100. De préférence, les joints annulaires 50, 52 sont surmoulés sur l'organe codeur 100. L'extrémité libre formée par le bord périphérique radialement externe des joints 50, 52 repose sur la surface interne de la cage externe 13 du roulement.

Selon le mode de réalisation particulier représenté sur les figures annexées les surfaces externes des joints 50, 52 dirigées respectivement vers les joints 34, 36, sont de forme concave. Ainsi les joints 50, 52 divergent en direction de leur bord libre radialement externe. Ce mode de réalisation n'est cependant pas limitatif.

Selon une caractéristique avantageuse de la présente invention, l'organe codeur 100, et le cas échéant les joints 50, 52 sont pourvus de passages traversants orientés parallèlement à l'axe 21 pour permettre une équi-pression dans le roulement de part et d'autre de l'organe codeur 100 et des joints 50, 52 et permettant de remplir le roulement en graisse. L'obtention d'une telle équi-pression de part et d'autre de l'organe codeur 100 limite largement les risques de fuite de graisse au niveau des joints 50, 52 vers l'espace intermédiaire défini entre ceux-ci.

Comme indiqué précédemment les surfaces de réflexion prévues sur l'organe codeur 100 peuvent faire l'objet de nombreuses variantes de réalisation.

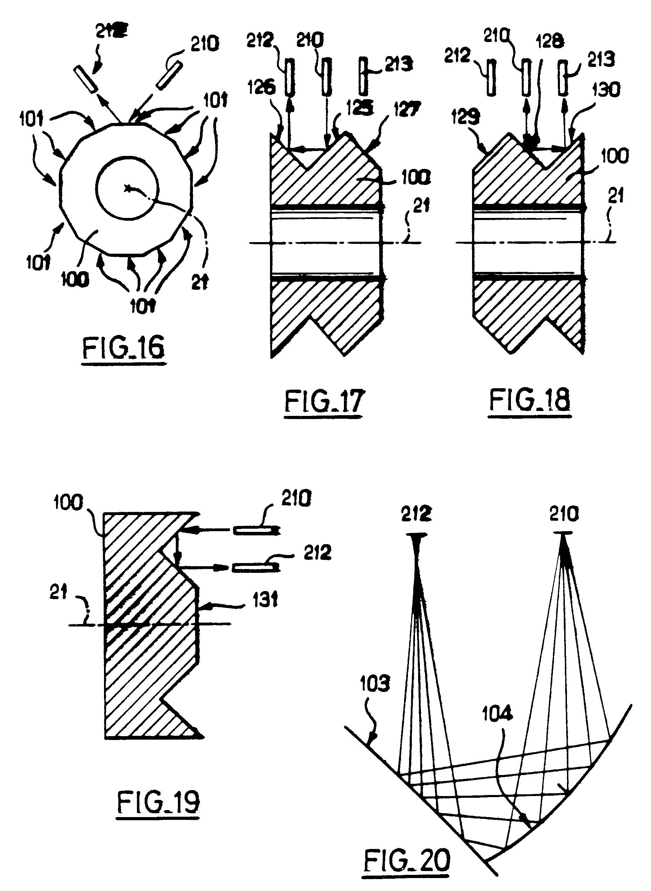

Comme représenté schématiquement sur la figure 16, selon un mode de réalisation, l'organe codeur 100 peut présenter une section droite en forme de polygone régulier de sorte que les surfaces de réflexion soient définies par les diverses facettes 101 équi-réparties autour de l'axe 21 définissant la surface périphérique radialement externe de l'organe codeur 100.

Dans ce cas les extrémités des fibres 210, 212 adjacentes à l'organe codeur 100 doivent être inclinées à 90° entre elles, symétriquement par rapport à un plan passant par l'axe 21 comme représenté sur la figure 16.

Toutefois, la Demanderesse a constaté que la disposition représentée sur la figure 16 et évoquée ci-dessus ne permet d'obenir qu'une dynamique relativement faible au niveau du signal de sortie du récepteur R. Ce mode de réalisation ne donne donc pas totalement satisfaction.

Une autre variante de réalisation peut être inspirée des dispositions décrites dans le document FR-A-2048032. C'est-à-dire que l'organe codeur 100 peut être réalisé en un matériau optiquement transparent dont la surface périphérique radialement externe est cylindrique de révolution autour de l'axe 21 afin de ne pas perturber ni dévier les faisceaux lumineux issus de l'émetteur E ou dirigés vers le récepteur R, tandis que la surface périphérique radialement interne du codeur 100 est délimitée par des paires de facettes aptes à réfléchir le rayon lumineux issu d'un émetteur E vers un récepteur R et travaillant de préférence pour cela à la façon d'un catadioptre.

Toutefois, la Demanderesse a constaté que cette disposition présente également un inconvénient notable : la surface périphérique radialement externe et les surfaces de réflexion radialement internes doivent être exemptes de toute salissure pour permettre un fonctionnement satisfaisant.

Par ailleurs, la réalisation d'indentation ainsi nécessaire au niveau de la périphérie radialement interne de l'organe codeur rend relativement complexe son assemblage sur l'élément rotatif 22.

Selon le mode de réalisation évoqué ci-dessus, inspiré du document FR-A-2048032, les paires de surfaces de réflexion associées délimitent des dièdres convexes.

Selon le mode de réalisation considéré actuellement comme préférentiel dans le cadre de la présente invention, les surfaces de réflexion sont formées de paires de surfaces de réflexion associées formées sur la surface périphérique radialement externe de l'organe de codage 100.

Selon une première variante représentée schématiquement sur les figures 3 et 4, la surface périphérique radialement externe de l'organe de codage 100 est ainsi délimitée par une succession de dentures 102 équi-réparties autour de l'axe 21. Chaque denture définie ainsi généralement un dièdre convexe vers l'extérieur. Les paires de surfaces de réflexion associées sont définies par deux surfaces en regard, telles que référencées 103, 104 sur la figure 3, de deux dentures adjacentes. Ces surfaces 103, 104 définissent un dièdre concave vers l'extérieur. De préférence, les surfaces 103, 104 adjacentes sont orthogonales entre elles pour travailler à la façon d'un catadioptre.

Les surfaces 103, 104 sont donc définies par des génératrices parallèles à l'axe 21.

Les fibres optiques 210, 212 associées respectivement à l'émetteur et au récepteur E, R, ont leurs extrémités adjacentes à l'organe codeur 100 alignées dans un plan normal à l'axe 21. Plus précisément les axes longitudinaux des extrémités des fibres optiques 210, 212 adjacentes à l'organe codeur 100, sont situés dans un plan commun perpendiculaire à l'axe 21. Par ailleurs, les fibres 210, 212 sont parallèles entre elles et symétriques par rapport à un plan passant par l'axe 21.

L'écart d représenté schématiquement sur la figure 3 entre les axes des deux fibres 210, 212 est égal au demi-pas des indentations 102 prévues sur la surface périphérique radialement externe de l'organe codeur 100. En d'autres termes, l'écart d entre les axes longitudinaux des fibres optiques 210, 212 est égal à la moitié de la distance séparant les sommets 105, 106 de deux dentures adjacentes, ou encore égal à la distance séparant le milieu des deux surfaces 103, 104 précitées.

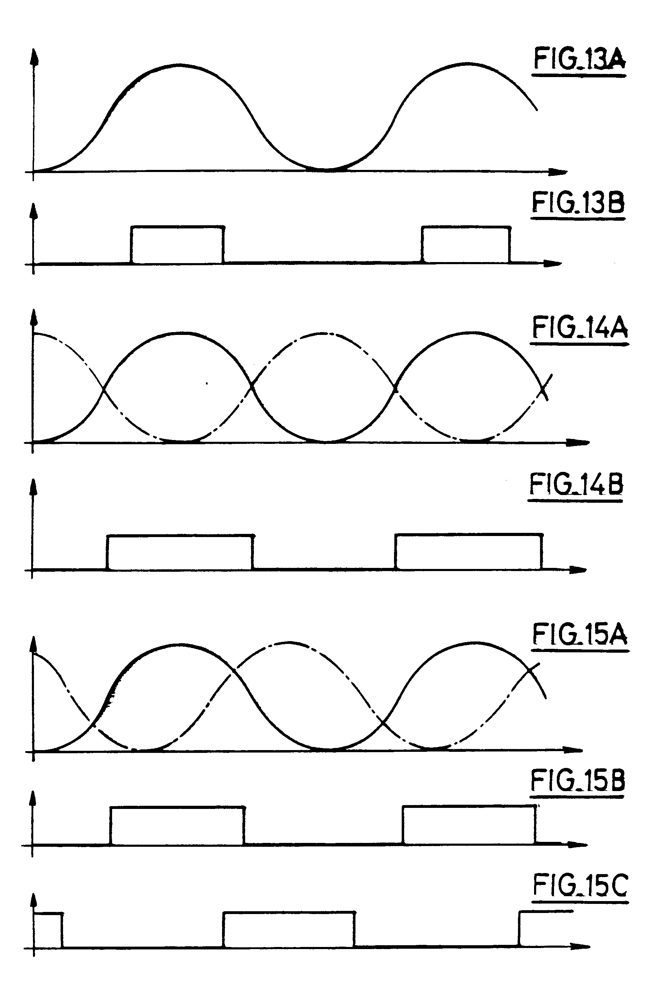

Le signal obtenu en sortie d'un récepteur R de type analogique à l'aide de l'organe codeur 100 représenté sur les figures 3 et 4 est représenté schématiquement sur la figure 13A. Le signal de sortie du récepteur R est généralement sinusoïdal. La fréquence de ce signal dépend de la vitesse de rotation de l'élément rotatif 22.

Comme représenté sur la figure 13B le signal analogique issu du récepteur optique R peut être transformé en un signal logique par comparaison du signal analogique illustré sur la figure 13A avec un seuil de référence déterminé.

L'homme de l'art comprendra aisément que le signal logique représenté sur la figure 13B permet de définir directement la vitesse de rotation de l'élément rotatif 22 puisque la fréquence du signal logique de la figure 13B est liée directement à cette vitesse.

Une autre variante de réalisation dans laquelle les surfaces de réflexion sont toujours formées sur la périphérie radialement externe de l'organe codeur 100 est illustrée sur les figures 5 à 10.

Selon cette variante, les surfaces de réflexion ne sont plus définies par des génératrices orientées parallèlement à l'axe 21 mais par des génératrices orientées dans la direction périphérique par rapport à cet axe 21. En d'autres termes, les surfaces de réflexion sont dans ce cas symétriques par rapport à un plan normal à l'axe 21. Par ailleurs, les fibres optiques 210, 212 n'ont plus leurs axes longitudinaux placés dans un plan commun perpendiculaire à l'axe 21 mais ont, au niveau de leur extrémité adjacente à l'organe codeur 100, leurs axes longitudinaux situés dans un plan commun passant par l'axe 21 comme illustré sur la figure 5. Les fibres 210, 212 parallèles entre elles sont symétriques par rapport à un plan normal à l'axe 21. Plus précisément, comme représenté schématiquement sur la figure 5, la périphérie radialement externe de l'organe codeur 100 est alors formée par une succession de régions 110 optiquement actives et de régions 111 optiquement inactives.

On appelle une région optiquement active 110 une région de la périphérie radialement externe de l'organe codeur 100 apte à renvoyer vers la fibre optique de réception 212 le faisceau lumineux issu de la fibre optique d'émission 210.

En revanche, on appelle une région optiquement inactive 111 une région de la périphérie radialement externe de l'organe codeur 100 inapte à renvoyer vers la fibre réceptrice 212 le faisceau lumineux issu de la fibre optique d'émission 210.

On a représenté schématiquement sur la figure 6 une vue en coupe axiale de l'organe codeur 100 passant par une région optiquement active 110.

On reconnaît sur la figure 6 les deux fibres optiques 210, 212 ayant leurs axes longitudinaux situés dans un plan commun passant par l'axe 21.

On retrouve également sur la figure 6 des paires de surfaces de réflexion 112, 113 symétriques par rapport à un plan normal à l'axe 21. Les surfaces 112, 113 définissent des dièdres concaves vers l'extérieur. Les surfaces 112, 113 sont de préférence orthogonales entre elles. Elles sont disposées respectivement en regard des fibres 210 et 212. De préférence, l'écart entre les axes longitudinaux des extrémités des fibres 210, 212 est égal à la distance séparant le milieu des surfaces 112, 113 comme indiqué précédemment en regard de la figure 3.

Les surfaces 112, 113 représentées sur la figure 6 décrite précédemment travaillent à la façon d'un catadioptre.

Les régions optiquement inactives 111 représentées sur la figure 5 peuvent faire l'ojet de nombreuses variantes de réalisation.

Certaines de ces variantes sont illustrées par exemple sur les figures 7 à 10.

Selon le mode de réalisation représenté sur la figure 7, au niveau des régions optiquement inactives 111, la surface périphérique radialement externe de l'organe codeur 100 est définie par une facette 114 et une facette 115. La facette 114 est placée en regard de la fibre optique d'émission 210. Elle est inclinée de 45° sur l'axe 21 et converge vers cet axe 21 en éloignement de la fibre optique de réception 212. Ainsi le faisceau lumineux issu de la fibre optique d'émission 210 est renvoyé par la facette 114 parallèlement à l'axe 21 en éloignement de la fibre optique de réception 212.

La seconde facette 115 est placée en regard de la fibre optique de réception 212. Elle est délimitée par une génératrice parallèle à l'axe 21.

Selon le mode de réalisation représenté sur la figure 8, les régions optiquement inactives 111 de l'organe codeur 100 sont délimitées par une génératrice 116 parallèle à l'axe 21. Il en est de même de la surface périphérique radialement interne 117 de l'organe codeur 100.

Ainsi le faisceau lumineux issu de la fibre optique d'émission 210 traverse sans déviation les surfaces périphériques radialement externe et radialement interne de l'organe codeur 100. De ce fait le faisceau lumineux n'est plus renvoyé vers la fibre optique de réception 212.

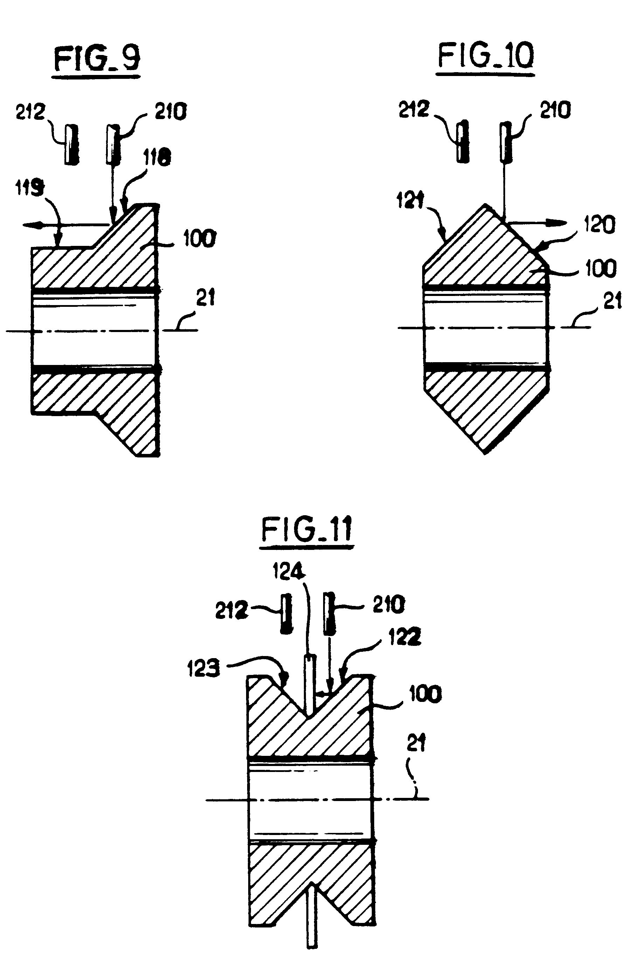

Selon le mode de réalisation représenté sur la figure 9, au niveau des régions optiquement inactives 111, la surface périphérique radialement externe de l'organe codeur 100 est définie principalement par deux facettes 118, 119. La facette 118 est placée en regard de la fibre optique d'émission 210. Elle est inclinée d'environ 45° par rapport à l'axe 21. La facette 118 converge vers l'axe 21 en rapprochement de la fibre optique de réception 212. Ainsi, la facette 118 dévie le faisceau lumineux issu de la fibre optique d'émission 210 parallèlement à l'axe 21 de sorte que celui-ci ne puisse atteindre la fibre optique de réception 212.

La seconde facette 119 est placée en regard de la fibre optique de réception 212. Elle est délimitée par une génératrice parallèle à l'axe 21.

Selon l'autre variante de réalisation représentée sur la figure 10, au niveau des régions optiquement inactives 111, la surface périphérique radialement externe de l'organe codeur 100 est délimitée par deux facettes 120, 121. Les facettes 120 sont placées en regard de la fibre d'optique d'émission 210. Elles sont inclinées d'environ 45° par rapport à l'axe 21. Les facettes 120 convergent vers l'axe 21 en éloignement de la fibre optique de réception 212.

Les secondes facettes 121 sont placées en regard de la fibre optique de réception 212. Elles sont inclinées d'environ 45° sur l'axe 21. Les secondes facettes 121 convergent vers l'axe 21 en éloignement de la fibre optique d'émission 210.

Les facettes 120 dévient le faisceau lumineux issu de la fibre optique d'émission 210 parallèlement à l'axe 21 de sorte que le faisceau ainsi dévié ne puisse atteindre la fibre optique de réception 212.

Selon la variante de réalisation représentée sud la figure 11, on retrouve deux fibres optiques 210, 212 respectivement d'émission et de réception dont les axes longitudinaux, au niveau de leurs extrémités adjacentes a l'organe codeur 100 sont situés dans un plan commun passant par l'axe 21 et sont parallèles entre elles, symétriques par rapport à un plan normal à l'axe 21.

On retrouve par ailleurs, sur la figure 11 des paires de surfaces de réflexion 122, 123 similaires optiquement aux surfaces 112, 113 précitées en regard de la figure 6. Les surfaces 122, 123 travaillent à la façon d'un catadioptre. Elles sont inclinées entre elles de 90°. Les surfaces de réflexion 122, 123 sont définies par des génératrices cylindriques de révolution autour de l'axe 21.

Toutefois, pour occulter séquentiellement le faisceau lumineux renvoyé par la surface 122, vers la surface en regard 123, il est prévu entre celles-ci une roue dentée opaque 124.

La roue 124 possède une périphérie extérieure dentée. Lorsqu'une dent de la roue 124 est placée sur le trajet lumineux, le faisceau lumineux renvoyé par la surface 122 est arrêté. Dans le cas contraire, le faisceau lumineux renvoyé par la surface 122 atteint la surface en regard 123 pour être dirigé vers la fibre optique de réception 212. Les surfaces 122, 123 de réflexion représentées sur la figure 11 délimitent un dièdre concave vers l'extérieur.

On notera que les variantes de réalisation représentées sur les figures 5 à 11 permettent d'obtenir directement un signal logique similaire à celui représenté sur la figure 13B.

Les modes de réalisation qui précèdent utilisent deux fibres optiques 210, 212 associées respectivement à un émetteur optique E et à un récepteur optique R.

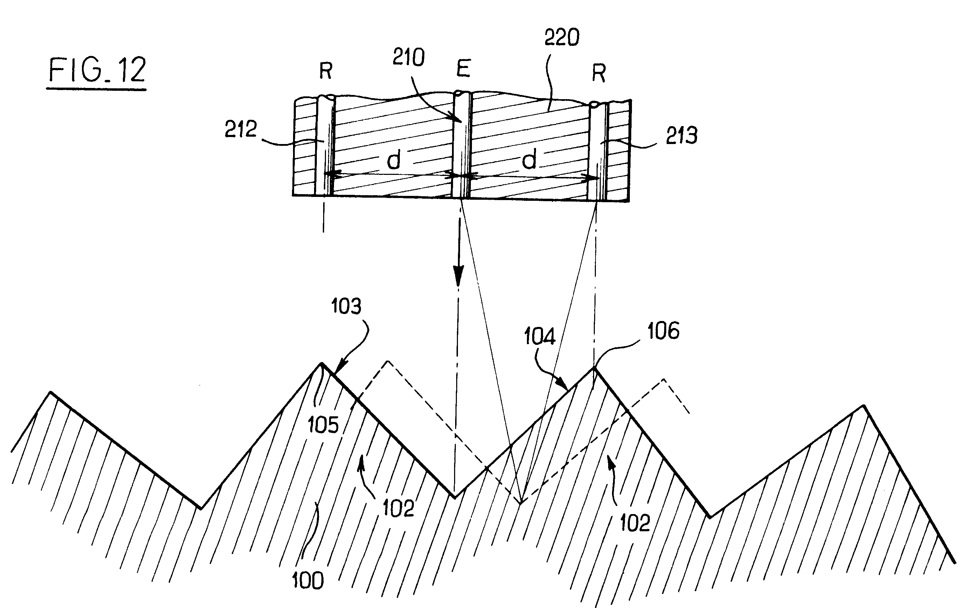

Comme représenté sur les figures 12, 17 et 18 on peut prévoir un transducteur optique comprenant un émetteur optique E, deux récepteurs optiques R et trois fibres optiques 210, 212 et 213 respectivement associées.

Dans ce cas de préférence les deux fibres optiques de réception 212, 213 sont placées respectivement de part et d'autre de la fibre optique d'émission 210.

Le transducteur optique ainsi formé comprenant un émetteur optique E, deux récepteurs optiques R, et trois fibres optiques 210, 212 et 213 peut coopérer comme représenté sur la figure 12 avec un organe de codage 100 tel que représenté sur la figure 3 et précédemment décrit. On rappelle que l'organe codeur 100 ainsi formé a sa périphérie radialement externe délimitée par une série de dentures 102 définissant des paires de surfaces de réflexion 103, 104 formant des dièdres concaves vers l'extérieur, de préférence des dièdres droits travaillant à la façon d'un catadioptre. Dans ce cas, les axes des fibres optiques 210, 212 et 213, au moins au niveau de l'extrémité de ces fibres adjacentes à l'organe codeur 100, sont situées dans un plan commun normal à l'axe 21. Les fibres 210, 212, 213 sont parallèles entre elles. La fibre d'émission 210 a son axe dans un plan passant par l'axe 21. Les fibres 212, 213 sont symétriques par rapport à ce plan.

Les signaux obtenus en sortie des récepteurs optiques R lors de la rotation de l'organe codeur 100 sont représentés sur la figure 14A. Ces signaux sont sensiblement sinusoïdaux et en opposition de phase.

La mise en forme de ces signaux analogiques représentés sur la figure 14A peut être obtenue en comparant chacun de ces signaux analogiques avec un seuil prédéterminé.

Toutefois, de préférence, la mise en forme de ces signaux analogiques représentés sur la figure 14A est réalisée en comparant ces signaux entre eux. Le signal logique ainsi obtenu est représenté sur la figure 14B. Comme représenté sur cette figure 14B la mise en forme des signaux issus des récepteurs R par comparaison de ces signaux entre eux garantit un rapport cyclique de 50%. On rappelle que le rapport cyclique du signal est défini comme étant le rapport entre la durée de l'état haut du signal et la période totale de celui-ci.

Un tel signal logique de rapport cyclique 50% de fréquence proportionnelle à la vitesse de rotation de la roue du véhicule automobile peut notamment être exploité avantageusement pour la commande d'un dispositif de type ABS (Anti Blocking System) ou ASR (anti-patinage).

L'écart entre l'extrémité de la fibre optique d'émission 210 adjacente à l'organe codeur 100 et l'extrémité adjacente de chacune des fibres optiques de réception 212, 213 doit là encore être égal au demi-pas des surfaces de réflexion 103, 104.

On peut également utiliser un transducteur optique comprenant un émetteur optique E et deux récepteurs optiques R associés à trois fibres optiques 210, 212, 213 ayant au niveau de leurs extrémités adjacentes à l'organe codeur 100, leurs axes contenus dans un plan commun passant par l'axe 21, comme illustré schématiquement sur les figures 17 et 18.

Pour cela les surfaces de réflexion doivent être adaptées pour dévier successivement le faisceau lumineux issu de la fibre optique d'émission 210 vers la première fibre optique de réception 212 puis vers la seconde fibre de réception 213 et ainsi de suite au cours de la rotation de l'organe codeur 100.

Pour cela les surfaces de réflexion associées aux trois fibres optiques 210, 212 et 213 peuvent être dérivées des dispositions définies sur les figures 6 à 11.

On peut ainsi prévoir une succession de surfaces de réflexion sur la surface périphérique extérieure de l'organe codeur, respectivement active à l'égard des fibres de réception 212, 213.

Les figures 17 et 18 représentent deux vues en coupe axiale du même organe codeur 100 selon deux plans de coupe angulairement espacés.

On aperçoit dans le plan de coupe de la figure 17 deux surfaces de réflexion 125, 126 placées respectivement en regard de la fibre optique d'émission 210 et d'une première fibre optique de réception 212 et délimitant un dièdre concave vers l'extérieur travaillant à la façon d'un catadioptre. En revanche, les surfaces 125 et 127 du plan de coupe de la figure 17 placées respectivement en regard de la fibre optique d'émission 210 et de la deuxième fibre optique de réception 213 délimitent un dièdre convexe vers l'extérieur de sorte que le faisceau lumineux issu de la fibre optique d'émission 210 ne puisse être renvoyé vers la fibre optique de réception 213.

La disposition des facettes délimitant la périphérie externe de l'organe codeur 100 est inversée dans le plan de coupe de la figure 18. C'est-à-dire que dans ce plan de coupe de la figure 18, les facettes 128, 129 placées respectivement en regard des fibres optiques d'émission 210 et de réception 212 délimitent un dièdre convexe vers l'extérieur de sorte que le faisceau lumineux issu de la fibre optique d'émission 210 ne puisse atteindre la fibre optique de réception 212.

En revanche, dans le plan de coupe de la figure 18, les deux facettes 128, 130 délimitant la surface périphérique radialement externe de l'organe codeur 100 et placées respectivement en regard de la fibre optique d'émission 210 et de la fibre optique de réception 213 délimitent un dièdre concave vers l'extérieur travaillant à la façon d'un catadioptre afin de renvoyer le faisceau lumineux issu de la fibre optique d'émission 210 vers la fibre optique de réception 213.

La disposition représentée sur les figures 17 et 18 permet d'obtenir directement en sortie des récepteurs optiques R un signal logique dont la fréquence est représentative de la vitesse de rotation de l'élément rotatif 22.

Bien entendu les surfaces de réflexion prévues sur l'organe codeur 100 et associées au transducteur optique à trois fibres peuvent faire l'objet de nombreuses variantes de réalisation inspirées par exemple de celles décrites précédemment pour le transducteur optique à deux fibres.

Selon les modes de réalisation précédemment décrits, les axes des faisceaux optiques dirigés vers l'organe codeur et renvoyés par celui-ci s'étendent généralement radialement par rapport à l'axe 21.

Comme représenté schématiquement sur la figure 19, on peut également envisager de disposer les fibres optiques 210, 212 et le cas échéant 210, 212 et 213 dans le cas d'un transducteur à trois fibres, parallèlement à l'axe 21 en adaptant en conséquence les surfaces de réflexion sur l'une des faces latérales 131, de l'organe codeur 100 transversales à l'axe 21.

Là encore bien entendu de nombreuses variantes de réalisation des surfaces de réflexion peuvent être retenues.

On peut par exemple prévoir une succession de régions optiquement actives et de régions optiquement inactives équi-réparties autour de l'axe 21 sur la face latérale 131 de l'organe codeur 100.

On peut également prévoir des surfaces de réflexion symétriques de révolution autour de l'axe 21 et un obturateur séquentiel similaire à la roue 124 représentée sur la figure 11 mais formé alors d'un élément cylindrique de révolution autour de l'axe 21.

Les différents modes de réalisation de l'organe codeur représentés sur les figures annexées peuvent être formées en accolant différents disques. Cette technique permet de simplifier la réalisation de l'organe codeur 100 en évitant l'usinage de surfaces complexes en forme de dièdre concave ou convexe.

On a évoqué précédemment des surfaces de réflexion formées de préférence de surfaces planes.

Comme représenté schématiquement sur la figure 20, les surfaces de réflexion peuvent cependant être optimisées sous forme de dioptres cylindriques ou sphériques en fonction de l'ouverture optique des fibres et de la distance séparant l'extrémité de celles-ci de l'organe codeur 100.

L'optimisation de la géométrie des surfaces de réflexion peut être obtenue par exemple à l'aide de nombreux logiciels disponibles actuellement dans le commerce et connus de l'homme de l'art.

Dans les variantes de réalisation du transducteur optique comprenant un émetteur optique E et deux récepteurs optiques R associés à trois fibres optiques 210, 212 et 213, on peut prévoir un déphasage entre les fibres optiques de réception 212 et 213 afin d'autoriser une détection du sens de rotation de l'élément rotatif 22.

Dans le cadre des variantes de réalisation inspirées de la figure 12 dans lesquelles les fibres optiques ont leurs axes situés dans un plan commun perpendiculaires à l'axe 21, il suffit pour cela de prévoir un écart différent entre la fibre optique d'émission 210 centrale et chacune des fibres optiques de réception latérales 212, 213.

Dans ce cas, comme représenté sur la figure 15A, les deux signaux issus des récepteurs R ne sont plus rigoureusement en opposition de phase. Le sens du décalage dépend du sens de rotation. L'ordre du changement d'état logique des signaux représentés sur les figures 15B et 15C, obtenus en comparant les signaux analogiques issus des récepteurs R avec des seuils prédéterminés, permet de déterminer aisément le sens de rotation de l'élément rotatif 22.

Dans le cadre des modes de réalisation représentés sur les figures 17 et 18 pour lesquels les fibres optiques 210, 212 et 213 ont leurs axes situés dans un plan commun passant par l'axe 21, la même détection du sens de rotation de l'élément rotatif 22 peut être obtenue en définissant un léger chevauchement des régions optiquement actives associées respectivement à chacune des fibres optiques de réception 212 et 213.

Selon une caractéristique avantageuse de la présente invention la distance séparant les extrémités des fibres optiques 210, 212 et 213 des surfaces de réflexion est au maximum de l'ordre de 2 fois le pas des surfaces de réflexion prévues sur l'organe de codage 100.

Selon une caractéristique avantageuse de la présente invention les extrémités des fibres 210, 212 et 213 adjacentes à l'organe de codage 100 sont supportées par un corps 220 surmoulé sur celles-ci. Le corps 220 définit ainsi l'écart entre les diverses fibres optiques. De préférence, le corps 220 est muni d'une bride 221 permettant la fixation sur la cage externe du roulement. De préférence, le corps surmoulé 220 est muni d'un joint d'étanchéité 222.

La seconde extrémité des fibres optiques 210, 212 et 213 est raccordée par l'intermédiaire de connecteurs optiques classiques aux éléments émetteur et récepteur optiques respectivement.

A titre d'exemple non limitatif, la présente invention peut utiliser des fibres de verre présentant un diamètre moyen de l'ordre de 200» et/ou des fibres plastiques présentant un diamètre moyen de l'ordre de 1mm.

En l'état actuel, la Demanderesse préfère une utilisation mixte de fibres optiques en verre 210 associées à l'émetteur optique E et de fibres optiques en matière plastique 212, 213 associées au récepteur optique R en raison des différences d'ouvertures optiques de ces deux types de fibres.

Comme indiqué précédemment, le capteur conforme à la présente invention trouve avantageusement application dans la commande d'un système ABS.

On notera que le capteur conforme à la présente invention fonctionne de façon fiable quelle que soit la vitesse de rotation de l'élément rotatif, en particulier à basse vitesse de celui-ci.

Le capteur conforme à la présente invention admet de larges tolérances tant axiales que radiales.

Il est par ailleurs pratiquement insensible aux vibrations. Il peut en outre supporter des températures élevées, telles que des températures pouvant atteindre 200° dans le cadre d'application aux roues de véhicules automobiles.

On comprendra que les deux joints à lèvres annulaires 50, 52 définissent entre eux, dans la chambre étanche du roulement, une sous-chambre étanche 500 contenant l'organe codeur 100 ces deux joints à lèvres annulaires interdisent le passage de graisse et autres salissures vers ladite sous-chambre 500. Ainsi, la sous-chambre 500 ne contient pas de graisse. Elle est remplie d'air.

Selon le mode de réalisation qui précède, la sous-chambre 500 est placée entre les deux séries de corps de roulement 30, 32. Les fibres optiques 210, 212, 213 débouchent dans la sous-chambre 500.

Bien entendu la présente invention n'est pas limitée aux modes de réalisation particuliers qui viennent d'être décrits mais s'étend à toutes variantes conformes à son esprit.

Comme indiqué précédemment, la notion de "chambre étanche de roulement" doit être comprise dans un sens large.

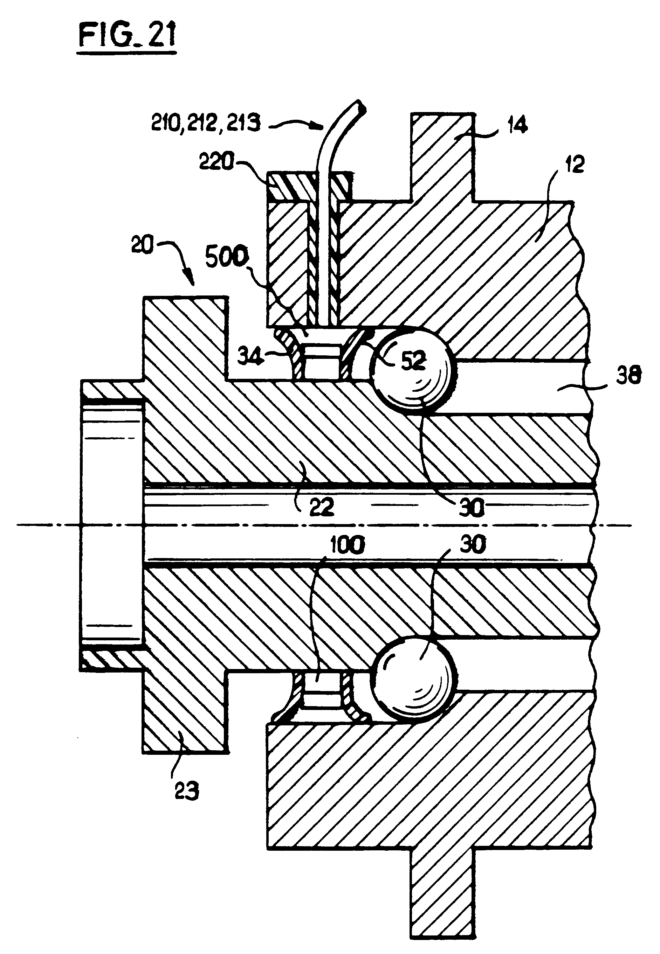

Comme représenté sur la figure 21 annexée, l'organe codeur 100 peut être placé à une extrémité de la chambre du roulement, soit non pas entre les deux séries de corps de roulement, mais sur l'extérieur de ceux-ci.

On retrouve sur la figure 21 un élément support 12, un moyeu 20, une série de corps de roulement 30, l'organe codeur 100, les fibres optiques 210, 212 et 213 et le corps 220 surmoulé sur celles-ci.

L'organe codeur 100 est placé entre un joint 34 du roulement et le joint annulaire 52.

Le joint 50 n'est plus nécessaire.

Le mode de réalisation représenté sur la figure 21 permet donc d'économiser un joint annulaire par rapport à la variante représentée sur la figure 1.

Dans ce cas, la sous-chambre 500 contenant l'organe codeur 100 est formée entre le joint 34 du roulement et le joint annulaire 52.

## Revendications

1. Capteur optique de vitesse d'un élément (22) rotatif par rapport à un élément de chassis fixe (10) comprenant :
- un organe codeur annulaire (100) fixé sur la cage mobile, liée à l'élément rotatif d'un roulement intercalé entre l'élément rotatif et l'élément de chassis fixe, lequel organe codeur (100) est pourvu d'une pluralité de surfaces de réflexion (103, 104) réparties autour de son axe (21), et
- un transducteur optique (200) fixé sur l'élément de chassis et comportant :
. au moins un émetteur optique (E) apte à diriger un faisceau lumineux sur lesdites surfaces de réflexion (103, 104),
. au moins un récepteur optique (R) apte à détecter le faisceau lumineux renvoyé par les surfaces de réflexion (103, 104), et
. au moins deux fibres optiques (210, 212, 213) dont une première extrémité est placée respectivement en regard de l'émetteur optique (E) et du récepteur optique (R), tandis que leur seconde extrémité débouche en regard de l'organe codeur (100)
caractérisé par le fait que :
l'organe codeur (100) est placé entre deux joints à lèvre annulaires (50, 52) qui définissent entre eux, dans la chambre étanche du roulement, une sous-chambre étanche (500) contenant l'organe codeur (100) et par le fait que ces deux joints à lèvre annulaires interdisent le passage de graisse et autres salissures vers ladite sous-chambre (500), l'organe codeur (100) étant muni de passages axiaux traversants pour permettre une équipression de part et d'autre des deux joints à lèvres annulaires (50, 52).

2. Capteur optique selon la revendication 1, caractérisé par le fait que les deux joints à lèvre annulaires (50, 52) sont surmoulés sur l'organe codeur (100).

3. Capteur optique selon l'une des revendications 1 ou 2, caractérisé par le fait que l'organe codeur (100) comprend des paires de surfaces de réflexion associées (103, 104) formant des dièdres.

4. Capteur optique selon la revendication 3, caractérisé par le fait que les paires de surfaces de réflexion associées (103, 104) formant des dièdres, constituent des catadioptres.

5. Capteur optique selon la revendication 1 à 4, caractérisé par le fait que l'organe codeur (100) est placé entre deux séries de corps de roulement (30, 32) du roulement.

6. Capteur optique selon l'une des revendications 1 à 4, caractérisé par le fait que l'organe codeur (100) est placé à une extrémité de la chambre étanche du roulement.

7. Capteur optique selon l'une des revendications 1 à 6, caractérisé par le fait que la cage extérieure (12) du roulement est formée d'un élément de chassis d'un véhicule automobile.

8. Capteur optique selon l'une des revendications 1 à 7, caractérisé par le fait que la cage intérieure (22) du roulement est formée d'un moyeu conçu pour recevoir une roue de véhicule automobile.

9. Capteur optique selon l'une des revendications 1 à 8, caractérisé par le fait que l'organe codeur (100) est réalisé en métal.

10. Capteur optique selon la revendication 9, caractérisé par le fait que l'organe codeur (100) est réalisé en métal chromé ou nickelé.

11. Capteur optique selon l'une des revendications 1 à 8, caractérisé par le fait que l'organe codeur (100) est réalisé par moulage de matière plastique revêtue d'une couche optiquement réfléchissante.

12. Capteur optique selon l'une des revendications 1 à 11, caractérisé par le fait qu'un corps de matière plastique (220) est surmoulé sur l'extrémité des fibres optiques (210, 212, 213) adjacente à l'organe codeur (100).

13. Capteur optique selon l'une des revendications 1 à 12, caractérisé par le fait que les surfaces de réflexion (103, 104) sont formées sur la surface périphérique radialement externe de l'organe codeur.

14. Capteur optique selon la revendication 13, caractérisé par le fait que les axes des extrémités des fibres optiques (210, 212, 213) adjacentes à l'organe codeur sont orientés sensiblement selon des rayons dressés à partir de l'axe (21) de l'organe codeur (100).

15. Capteur optique selon l'une des revendications 1 à 12, caractérisé par le fait que les surfaces de réflexion sont formées sur une face latérale (31) de l'organe codeur (100) transversale à son axe (21).

16. Capteur optique selon la revendication 15, caractérisé par le fait que les axes des extrémités des fibres optiques (210, 212, 213) adjacentes à l'organe codeur (100) sont sensiblement parallèles à l'axe (21) de l'organe codeur (100).

17. Capteur optique selon l'une des revendications 1 à 16, caractérisé par le fait que la surface périphérique extérieure de l'organe codeur (100) est dentée, les surfaces adjacentes (103, 104) de deux dents voisines (105) formant des dièdres concaves vers l'extérieur.

18. Capteur optique selon la revendication 17, caractérisé par le fait que les dièdres concaves (103, 104) sont symétriques par rapport à des plans axiaux passant par l'axe (21) de l'organe codeur (100).

19. Capteur optique selon l'une des revendications 17 ou 18, caractérisé par le fait que les fibres optiques (210, 212, 213) ont leurs axes situés dans un plan commun généralement transversal à l'axe (21) de l'organe codeur.

20. Capteur optique selon l'une des revendications 1 à 16, caractérisé par le fait que la surface périphérique extérieure de l'organe codeur (100) est formée d'une succession de régions optiquement actives (110) aptes à renvoyer la lumière issue d'une fibre optique d'émission (210) vers une fibre optique de réception (212, 213) et de régions optiquement inactives (111) inaptes à renvoyer la lumière issue d'une fibre optique d'émission (210) vers une fibre optique de réception (212, 213).

21. Capteur optique selon la revendication 20, caractérisé par le fait que les régions optiquement actives (110) comprennent des paires de surfaces de réflexion (112, 113) formant des dièdres concaves symétriques par rapport à un plan normal à l'axe (21) de l'organe codeur.

22. Capteur optique selon l'une des revendications 20 ou 21, caractérisé par le fait que les fibres optiques (210, 212, 213) ont leurs axes situés dans un plan commun passant par l'axe (21) de l'organe codeur (100).

23. Capteur optique selon la revendication 21, caractérisé par le fait que les régions optiquement inactives (111) sont délimitées par un obturateur denté annulaire (124) placé entre les paires de surfaces de réflexion (112, 113).

24. Capteur optique selon l'une des revendications 1 à 12, caractérisé par le fait que l'organe codeur (100) est réalisé en un matériau optiquement transparent, sa surface périphérique extérieure est cylindrique de révolution autour de son axe, et les surfaces de réflexion sont formées sur sa surface périphérique interne.

25. Capteur optique selon l'une des revendications 1 à 12 caractérisé par le fait que l'organe codeur (100) a une section droite constante en forme de polygone régulier et les surfaces de réflexion sont formées par les facettes de la surface périphérique extérieure de l'organe codeur (100).

26. Capteur optique selon l'une des revendications 1 à 25, caractérisé par le fait qu'il comprend un émetteur optique (E) et deux récepteurs optiques (R) associés respectivement à trois fibres optiques (210, 212, 213).

27. Capteur optique selon l'une des revendications 1 à 26, caractérisé par le fait que les deux extrémités des deux fibres optiques (212, 213) associées aux récepteurs (R) sont placées respectivement de part et d'autre de la fibre optique (210) associée à l'émetteur (E).

28. Capteur optique selon la revendication 27, caractérisé par le fait que les deux fibres optiques de réception (212, 213) sont situées à égale distance de la fibre optique d'émission (210).

29. Capteur optique selon l'une des revendications 1 à 28, caractérisé par le fait que la distance (d) entre l'axe d'une fibre optique de réception (212, 213) et l'axe de la fibre optique d'émission (210) est égale au demi-pas des surfaces de réflexion (103, 104) sur l'organe codeur.

30. Capteur optique selon la revendication 27, caractérisé par le fait que les fibres optiques de réception (212, 213) sont placées à des distances différentes de la fibre optique d'émission (210) pour permettre une détection du sens de rotation de l'élément rotatif (22).

31. Capteur optique selon les revendications 20 et 26 prises en combinaison, caractérisé par le fait que les régions optiquement actives (110) associées respectivement aux deux fibres optiques de réception (212, 213) se chevauchent partiellement pour permettre une détection du sens de rotation de l'élément rotatif (22).

32. Capteur optique selon l'une des revendications 1 à 31, caractérisé par le fait que les signaux issus d'un récepteur optique (R) sont mis en forme par comparaison avec un seuil prédéterminé.

33. Capteur optique selon l'une des revendications 1 à 31, caractérisé par le fait que les signaux issus des récepteurs optiques (R) sont mis en forme par comparaison de ces signaux entre eux.

## Claims

1. An optical sensor for sensing the speed of an element (22) that rotates relative to a fixed chassis element (10), the sensor comprising:
an annular encoder member (100) fixed to a moving cage, that is tied to the rotary element of a bearing which is interposed between the rotary element and the fixed chassis element, which encoder member (100) is provided with a plurality of reflection surfaces (103, 104) distributed around its axis (21), and
an optical transducer (200) fixed on the chassis element and including:
at least one light emitter (E) suitable for directing a light beam on said reflection surfaces (103, 104);
at least one light receiver (R) suitable for detecting the light beam reflected by the reflection surfaces (103, 104); and
at least two optical fibers (210, 212, 213) having respective first ends placed facing the light emitter (E) and the light receiver (R), and respective second ends opening out to face the encoder member (100);
characterized by the fact that the encoder member (100) is placed between two annular lip seals (50, 52) which between them, and within the sealed chamber of the bearing, define a sealed subchamber (500) that contains the encoding member (100), and by the fact that said two annular lip seals prevent grease and other dirt penetrating into said subchamber (500), the encoding member (100) being provided with axial through passages to allow pressures to equalize across said two annular lip seals (50, 52).

2. An optical sensor according to claim 1, characterized by the fact that the two annular lip joints (50, 52) are molded onto the encoding member (100).

3. An optical sensor according to claim 1 or 2, characterized by the fact that the encoding member (100) comprises pairs of associated reflection surfaces (103, 104) forming dihedral angles.

4. An optical sensor according to claim 3, characterized by the fact that the pairs of associated reflection surfaces (103, 104) forming dihedral angles constitute catadioptrics.

5. An optical sensor according to claim 1 to 4, characterized by the fact that the encoder member (100) is placed between two series of rolling bodies (30, 32) of the bearing.

6. An optical sensor according to any one of claims 1 to 4, characterized by the fact that the encoding member (100) is placed at one end of the sealed chamber of the bearing.

7. An optical sensor according to any one of claims 1 to 6, characterized by the fact that the outer cage (12) of the bearing is formed by a chassis component of a motor vehicle.

8. An optical sensor according to any one of claims 1 to 7, characterized by the fact that the inner cage (22) of the bearing is formed by a hub designed to receive the wheel of a motor vehicle.

9. An optical sensor according to any one of claims 1 to 8, characterized by the fact that the encoder member (100) is made of metal.

10. An optical sensor according to any claim 9, characterized by the fact that the encoder member (100) is made of metal that is chromium or nickel plated.

11. An optical sensor according to any one of claims 1 to 8, characterized by the fact that the encoder member (100) is made by a plastics molding coated in an optically reflecting layer.

12. An optical sensor according to any one of claims 1 to 11, characterized by the fact that a plastics body (220) is molded onto the ends of the optical fibers (210, 212, 213) adjacent to the encoder member (100).

13. An optical sensor according to any one of claims 1 to 12, characterized by the fact that the reflection surfaces (103, 104) are formed on the radially outer peripheral surface of the encoder member.

14. An optical sensor according to claim 13, characterized by the fact that the axes of the ends of the optical fibers (210, 212, 213) adjacent to the encoder member point substantially along radii extending from the axis (21) of the encoder member (100).

15. An optical sensor according to any one of claims 1 to 12, characterized by the fact that the reflection surfaces are formed on a side face (31) of the encoder member (100) extending transversely to its axis (21).

16. An optical sensor according to claim 15, characterized by the fact that the axes of the ends of the optical fibers (210, 212, 213) adjacent to the encoder member (100) are substantially parallel to the axis (21) of the encoder member (100).

17. An optical sensor according to any one of claims 1 to 16, characterized by the fact that the outer peripheral surface of the encoder member (100) is toothed, the adjacent surfaces (103, 104) of two adjacent teeth (105) forming outwardly concave dihedral angles.

18. An optical sensor according to claim 17, characterized by the fact that the concave dihedral angles (103, 104) are symmetrical about axial planes containing the axis (21) of the encoder member (100).

19. An optical sensor according to claim 17 or 18, characterized by the fact that the axes of the optical fibers (210, 212, 213) are situated in a common plane that extends generally transversely to the axis (21) of the encoder member.

20. An optical sensor according to any one of claims 1 to 16, characterized by the fact that the outer peripheral surface of the encoder member (100) is formed by a succession of optically active regions (110) suitable for reflecting light coming from a light-emitting fiber (210) towards a light-receiving fiber (212, 213), and of optically inactive regions (111) unsuitable for reflecting the light from a light-emitting fiber (210) towards a light-receiving fiber (212, 213).

21. An optical sensor according to claim 20, characterized by the fact that the optically active region (110) comprise pairs of reflection surfaces (112, 113) forming concave dihedral angles that are symmetrical about a plane normal to the axis (21) of the encoder member.

22. An optical sensor according to claim 20 or 21, characterized by the fact that the axes of the optical fibers (210, 212, 213) are situated in a common plane that contains the axis (21) of the encoder member (100).

23. An optical sensor according to claim 21, characterized by the fact that the optically inactive regions (110) are defined by an annular toothed shutter (124) placed between pairs of reflection surfaces (112, 113).

24. An optical sensor according to any one of claims 1 to 12, characterized by the fact that the encoder member (100) is made of an optically transparent material, its outer peripheral surface is circularly cylindrical about its axis, and the reflection surfaces are formed on its inner peripheral source.

25. An optical sensor according to any one of claims 1 to 12, characterized by the fact that the encoder member (100) has a constant right cross-section that is in the form of a regular polygon, and the reflection surfaces are formed by the facets of the outer peripheral surface of the encoder member (100).

26. An optical sensor according to any one of claims 1 to 25, characterized by the fact that it includes a light emitter (E) and two light receivers (R) respectively associated with three optical fibers (210, 212, 213).

27. An optical sensor according to any one of claims 1 to 26, characterized by the fact that the two ends of the two optical fibers (212, 213) associated with the light receivers (R) are placed respectively on either side of the optical fiber (210) associated with the light emitter (E).

28. An optical sensor according to claim 27, characterized by the fact that the two light-receiving fibers (212, 213) are situated at equal distances from the light-emitting fiber (210).

29. An optical sensor according to any one of claims 1 to 28, characterized by the fact that the distance d between the axis of a light-receiving fiber (212, 213) and the axis of the light-emitting fiber (210) is equal to half the pitch of the reflection surfaces (103, 104) on the encoder member.

30. An optical sensor according to claim 27, characterized by the fact that the light-receiving fibers (212, 213) are placed at different distances from the light-emitting fiber (210) to enable the direction of rotation of the rotary element (22) to be detected.

31. An optical sensor according to claims 20 and 26 taken in combination, characterized by the fact that the optically active regions (110) respectively associated with the two light-receiving fibers (212, 213) overlap partially so as to allow the direction of rotation of the rotary element (22) to be detected.

32. An optical sensor according to any one of claims 1 to 31, characterized by the fact that the signals delivered by a light receiver (R) are shaped by being compared with a predetermined threshold.

33. An optical sensor according to any one of claims 1 to 31, characterized by the fact that the signals delivered by the light receivers (R) are shaped by mutual comparison of said signals.

## Patentansprüche

1. Optischer Meßfühler für die Geschwindigkeit eines Elementes (22), das sich bezüglich eines festen Rahmenelementes (10) dreht, mit:
- einem ringförmigen Codierelement (100), das an dem mit dem sich drehenden Element verbundenen, beweglichen Gehäuse eines Wälzlagers angebracht ist, das zwischen dem sich drehenden Element und dem festen Rahmenelement liegt, welches Codierelement (100) mit mehreren Reflexionsflächen (103, 104) versehen ist, die um seine Achse (21) verteilt sind, und
- einem optischen Wandler (200), der am Rahmenelement befestigt ist und
wenigstens einen Lichtgeber (E), der ein Lichtbündel auf die Reflexionsflächen (103, 104) werfen kann,
wenigstens einen Lichtempfänger (R), der das Lichtbündel erfassen kann, das von den Reflexionsflächen (103, 104) zurückgeworfen wird, und
wenigstens zwei optische Fasern (210, 212, 213) umfaßt, deren erstes Ende jeweils dem Lichtgeber (E) und dem Lichtempfänger (R) gegenüberliegt, während ihr zweites Ende dem Codierelement (100) gegenüber mündet, dadurch gekennzeichnet, daß das Codierelement (100) zwischen zwei ringförmigen Lippendichtungen (50, 52) angeordnet ist, die dazwischen in der dicht abgeschlossenen Kammer des Wälzlagers eine dichte Unterkammer (500) begrenzen, die das Codierelement (100) enthält, und daß die beiden ringförmigen Lippendichtungen den Durchgang von Fett und anderen Verunreinigungen zu der Unterkammer (500) verhindern, wobei das Codierelement (100) mit quer verlaufenden axialen Kanälen versehen ist, um einen gleichen Druck auf beiden Seiten der beiden ringförmigen Lippendichtungen (50, 52) zu ermöglichen.

2. Optischer Meßfühler nach Anspruch 1, dadurch gekennzeichnet, daß die beiden ringförmigen Lippendichtungen (50, 52) an das Codierelement (100) angeformt sind.

3. Optischer Meßfühler nach einem der Ansprüche 1 oder 2, dadurch gekennzeichnet, daß das Codierelement (100) Paare von zugehörigen Reflexionsflächen (103, 104) umfaßt, die Dieder bilden.

4. Optischer Meßfühler nach Anspruch 3, dadurch gekennzeichnet, daß die Paare von zugehörigen Reflexionsflächen (103, 104), die Dieder bilden, aus katadioptrischen Elementen bestehen.

5. Optischer Meßfühler nach Anspuch 1 bis 4, dadurch gekennzeichnet, daß das Codierelement (100) zwischen zwei Reihen von Wälzkörpern (30, 32) des Wälzlagers angeordnet ist.

6. Optischer Meßfühler nach einem der Ansprüche 1 bis 4, dadurch gekennzeichnet, daß das Codierelement (100) an einem Ende der dicht abgeschlossenen Kammer des Wälzlagers angeordnet ist.

7. Optischer Meßfühler nach einem der Ansprüche 1 bis 6, dadurch gekennzeichnet, daß das äußere Gehäuse (12) des Wälzlagers von einem Rahmenelement eines Kraftfahrzeuges gebildet ist.

8. Optischer Meßfühler nach einem der Ansprüche 1 bis 7, dadurch gekennzeichnet, daß das innere Gehäuse (22) des Wälzlagers von einer Nabe gebildet ist, die dazu bestimmt ist, ein Rad des Kraftfahrzeuges aufzunehmen.

9. Optischer Meßfühler nach einem der Ansprüche 1 bis 8, dadurch gekennzeichnet, daß das Codierelement (100) aus einem Metall besteht.

10. Optischer Meßfühler nach Anspruch 9, dadurch gekennzeichnet, daß das Codierelement (100) aus dem Metall Chrom oder Nickel besteht.

11. Optischer Meßfühler nach einem der Ansprüche 1 bis 8, dadurch gekennzeichnet, daß das Codierelement (100) aus einem Kunststoffgußteil besteht, das mit einer optisch reflektierenden Schicht verkleidet ist.

12. Optischer Meßfühler nach einem der Ansprüche 1 bis 11, dadurch gekennzeichnet, daß ein Körper aus einem Kunststoffmaterial (220) an das Ende der optischen Fasern (210, 212, 213) neben dem Codierelement (100) angeformt ist.

13. Optischer Meßfühler nach einem der Ansprüche 1 bis 12, dadurch gekennzeichnet, daß die Reflexionsflächen (103, 104) an der radial außen liegenden Umfangsfläche des Codierelementes ausgebildet sind.

14. Optischer Meßfühler nach Anspruch 13, dadurch gekennzeichnet, daß die Achsen der Enden der optischen Fasern (210, 212, 213) neben dem Codierelement im wesentlichen längs der Radien ausgehend von der Achse (21) des Codierelementes (100) ausgerichtet sind.

15. Optischer Meßfühler nach einem der Ansprüche 1 bis 12, dadurch gekennzeichnet, daß die Reflexionsflächen an einer Seitenfläche (31) des Codierelementes (100) ausgebildet sind, die quer zu seiner Achse (21) verläuft.

16. Optischer Meßfühler nach Anspruch 15, dadurch gekennzeichnet, daß die Achsen der Enden der optischen Fasern (210, 212, 213) neben dem Codierelement (100) im wesentlichen parallel zur Achse (21) des Codierelementes (100) verlaufen.

17. Optischer Meßfühler nach einem der Ansprüche 1 bis 16, dadurch gekennzeichnet, daß die äußere Umfangsfläche des Codierelementes (100) gezahnt ausgebildet ist, wobei die nebeneinanderliegenden Flächen (103, 104) von zwei benachbarten Zähnen (105) nach außen konkave Dieder bilden.

18. Optischer Meßfühler nach Anspruch 17, dadurch gekennzeichnet, daß die konkaven Dieder (103, 104) symmetrisch bezüglich axialer Ebenen sind, die durch die Achse (21) des Codierelementes (100) gehen.

19. Optischer Meßfühler nach einem der Ansprüche 17 oder 18, dadurch gekennzeichnet, daß die optischen Fasern (210, 212, 213) mit ihren Achsen in einer gemeinsamen Ebene liegen, die im wesentlichen quer zur Achse (21) des Codierelementes (100) verläuft.

20. Optischer Meßfühler nach einem der Ansprüche 1 bis 16, dadurch gekennzeichnet, daß die äußere Umfangsfläche des Codierelementes (100) mit einer Folge optisch aktiver Bereiche (110), die das von einer lichtaussendenden optischen Faser (210) ausgesandte Licht zu einer lichtaufnehmenden optischen Faser (212, 213) zurückwerfen können, und optisch inaktiver Bereiche (111) ausgebildet ist, die nicht in der Lage sind, das von einer lichtaussendenden optischen Faser (210) ausgesandte Licht zu einer lichtempfangenden optischen Faser (212, 213) zurückzuwerfen.

21. Optischer Meßfühler nach Anspruch 20, dadurch gekennzeichnet, daß die optisch aktiven Bereiche (110) Paare von Reflexionsflächen (112, 113) umfassen, die konkave Dieder bilden, die bezüglich einer Ebene normal auf die Achse (21) des Codierelementes symmetrisch sind.

22. Optischer Meßfühler nach einem der Ansprüche 20 oder 21, dadurch gekennzeichnet, daß die optischen Fasern (210, 212, 213) mit ihren Achsen in einer gemeinsamen Ebene liegen, die durch die Achse (21) des Codierelementes (100) geht.

23. Optischer Meßfühler nach Anspruch 21, dadurch gekennzeichnet, daß die optisch inaktiven Bereiche (111) von einer gezahnten ringförmigen Blende (124) begrenzt sind, die zwischen den Paaren von Reflexionsflächen (112, 113) angeordnet ist.

24. Optischer Meßfühler nach einem der Ansprüche 1 bis 12, dadurch gekennzeichnet, daß das Codierelement (100) aus einem lichtdurchlässigen Material besteht, daß seine äußere Umfangsfläche um seine Achse drehzylindrisch ausgebildet ist und daß die Reflexionsflächen an der inneren Umfangsfläche ausgebildet sind.

25. Optischer Meßfühler nach einem der Ansprüche 1 bis 12, dadurch gekennzeichnet, daß das Codierelement (100) einen konstanten Querschnitt in Form eines regelmäßigen Polygons hat und daß die Reflexionsflächen durch die Facetten der äußeren Umfangsfläche des Codierelementes (100) gebildet sind.

26. Optischer Meßfühler nach einem der Ansprüche 1 bis 25, dadurch gekennzeichnet, daß er einen Lichtgeber (E) und zwei Lichtempfänger (R) umfaßt, die jeweils drei optischen Fasern (210, 212, 213) zugeordnet sind.

27. Optischer Meßfühler nach einem der Ansprüche 1 bis 26, dadurch gekennzeichnet, daß die beiden Enden der beiden optischen Fasern (212, 213), die zu den Lichtempfängern (R) gehören, jeweils auf beiden Seiten der optischen Faser (210) angeordnet sind, die zum Lichtgeber (E) gehört.

28. Optischer Meßfühler nach Anspruch 27, dadurch gekennzeichnet, daß die beiden lichtaufnehmenden optischen Fasern (212, 213) im gleichen Abstand von der lichtaussendenden optischen Faser (210) angeordnet sind.

29. Optischer Meßfühler nach einem der Ansprüche 1 bis 28, dadurch gekennzeichnet, daß der Abstand (d) zwischen der Achse einer lichtaufnehmenden optischen Faser (212, 213) und der Achse der lichtaussendenden optischen Faser (210) gleich der halben Schrittweite der Reflexionsflächen (103, 104) des Codierelementes ist.

30. Optischer Meßfühler nach Anspruch 27, dadurch gekennzeichnet, daß die lichtaufnehmenden optischen Fasern (212, 213) unter verschiedenen Abständen zur lichtaussendenden optischen Faser (210) angeordnet sind, um den Drehsinn des sich drehenden Elementes (22) erfassen zu können.

31. Optischer Meßfühler nach einer Kombination der Ansprüche 20 und 26, dadurch gekennzeichnet, daß die optisch aktiven Bereiche (110), die jeweils zu den beiden lichtaufnehmenden optischen Fasern (212, 213) gehören, einander teilweise überlappen, um eine Erfassung des Drehsinns des sich drehenden Elementes (22) zu ermöglichen.

32. Optischer Meßfühler nach einem der Ansprüche 1 bis 31, dadurch gekennzeichnet, daß die von einem Lichtempfänger (R) ausgegebenen Signale durch einen Vergleich mit einem bestimmten Schwellenwert geformt werden.

33. Meßfühler nach einem der Ansprüche 1 bis 31, dadurch gekennzeichnet, daß die von den Lichtempfängern (R) ausgegebenen Signale durch einen Vergleich der Signale miteinander geformt werden.
